# EUROPEAN PATENT SPECIFICATION

(11) **EP 3 038 306 B1**
(45) Date of publication and mention of the grant of the patent: **20.12.2017**
(21) Application number: 14788986.9
(22) Date of filing: 16.05.2014
(51) Int. Cl.: H04L 12/815

(54) **LOAD BALANCING METHOD AND SYSTEM**
LASTENAUSGLEICHSVERFAHREN UND -SYSTEM
PROCÉDÉ ET SYSTÈME D'ÉQUILIBRAGE DE CHARGE

(30) Priority: 22.08.2013 CN 201310373164
(43) Date of publication of application: 29.06.2016
(73) Proprietor: ZTE Corporation, Shenzhen, Guangdong 518057 (CN)
(72) Inventor: LIU, Dehong, Shenzhen Guangdong 518057 (CN)
(74) Representative: Lavoix
(86) International application number: PCT/CN2014/077711
(87) International publication number: WO 2014/173341

(56) References cited:
- CN-A- 101 815 033
- CN-A- 103 051 551
- CN-A- 103 259 739
- CN-A- 103 457 870
- US-A1- 2012 102 226
- US-A1- 2012 155 266
- US-A1- 2013 086 234
- US-A1- 2013 128 732
- LIU, SONG ET AL.: 'Web Cluster Load Balancing Algorithm Based on Service Type' JOURNAL OF WUHAN UNIVERSITY OF TECHNOLOGY vol. 19, no. 31, 31 October 2009, pages 135 - 136, XP008179735

## Description

### TECHNICAL FIELD

The present disclosure relates to the field of communications, and more particularly, to a load balancing method and a load balancing system.

### BACKGROUND

With the increase of service visits and the rapid growth of data traffic, the processing capability and the calculation strength of system become greater too, making a single server unable to bear it. Load balancing is to balance and share load (work task) onto multiple operation units to execute, so that the operation units complete the work task together, thereby obtaining a high resource utilization, increasing the system throughput rate, reducing the response time and avoiding overload.

Present load balancing includes a hardware load balancing method and a software load balancing method. The hardware load balancing method is to share, by a load balancing device, a service request onto each operation unit according to a load rule with a service provider (and server) as a unit, which has a high cost; with the increase of service amount, device cost is increasing too.

The software load balancing technology replaces a hardware device by software, which directly selects a server with a lower load when there is a service to be processed at a client and then establishes a connection with a service object on the server, so that the service object completes a corresponding service request sent by the client.

No matter the present software load balancing technology or the hardware load balancing technology, judgement is conducted taking a server as a unit during the calculation process of load balancing. When there are lots of client concurrent operations in a distributed application system, the server establishing a connection with the client might process multiple types of service requests and provide multiple services; during the running process of system, it might appear that in one same server one service has a heavy load while other services have a low load; at this time, the judgment conducted taking a server as a unit will result in a judgment of heavy load and slow running of a certain service in the server, thereby judging that the server is overloaded. However, for other services with low load in this server, this is a misjudgement, which consequently affects the execution of other services in this server and reduces the utilization of resources.

According to US 2013/0086234 A1, a cloud management system and method are described. At least one cloud connected to the cloud resource management unit, each of the at least one clouds including attributes for controlling a service provided by the corresponding cloud and an interface for modifying the attributes. The corresponding cloud provides the service to a user of the information technology system. The cloud resource management unit further including attribute conversion unit to convert a received request to modify or retrieve the attributes of the information technology system to requests to modify or retrieve the attributes of one or more of the corresponding clouds.

### SUMMARY

To solve existing technical problems, embodiments of the present disclosure provide a load balancing method and a load balancing system.

The features of the method and device according to the present disclosure are defined in the independent claims, and the preferable features according to the present invention are defined in the dependent claims.

With the load balancing method and system provided by the embodiment of the present disclosure, in a load balancing process, services that can be provided by a service provision module are registered, after a service use module initiates a service request, a list of service provision modules that can provide a corresponding service is acquired according to the request, and then according to the list, a service provision module is selected from the list through a load balancing algorithm to perform the service requested by the service use module. It is thus clear that the present disclosure carries out load calculation according to a list of service provision modules of a certain service, that is, the present disclosure carries out load balancing calculation with a service but a server as a unit; therefore, the present disclosure avoids a misjudgement to other services provided by the same server, and will never affect the execution of other services provided by the same service provision module, and thus improves the utilization of resources.

### BRIEF DESCRIPTION OF THE DRAWINGS

Fig. 1 is a flowchart of a load balancing method according to an embodiment of the present disclosure;
Fig. 2 is a flowchart of registering services that can be provided by a service provision module in Fig. 1;
Fig. 3 is a flowchart of acquiring a list of service provision modules according to a service request in Fig. 1;
Fig. 4 is a flowchart of selecting a service provision module according to the list of service provision modules in Fig. 1;
Fig. 5 is a flowchart of decreasing the number of service provision modules according to an embodiment of the present disclosure;
Fig. 6 is a flowchart of increasing the number of service provision modules according to an embodiment of the present disclosure;
Fig. 7 is a first structure diagram of a load balancing system according to an embodiment of the present disclosure;
Fig. 8 is a second structure diagram of a load balancing system according to an embodiment of the present disclosure;
Fig. 9 is a flowchart of carrying out a load balancing method based on the system in Fig. 8; and
Fig. 10 is a flowchart of decreasing the number of service provision modules based on the system in Fig. 8.

### DETAILED DESCRIPTION

An embodiment of the present disclosure provides a load balancing method which performs load balancing with a single service but a server as a unit. The load balancing method avoids a misjudgement to services with a low load in a server when each service is not balanced in the server, prevents the impact to the execution of this type of services and avoids the reduction of resource utilization. To better understand the present disclosure, a further detailed description is given to the present disclosure through specific implementations below by reference to the accompanying drawings.

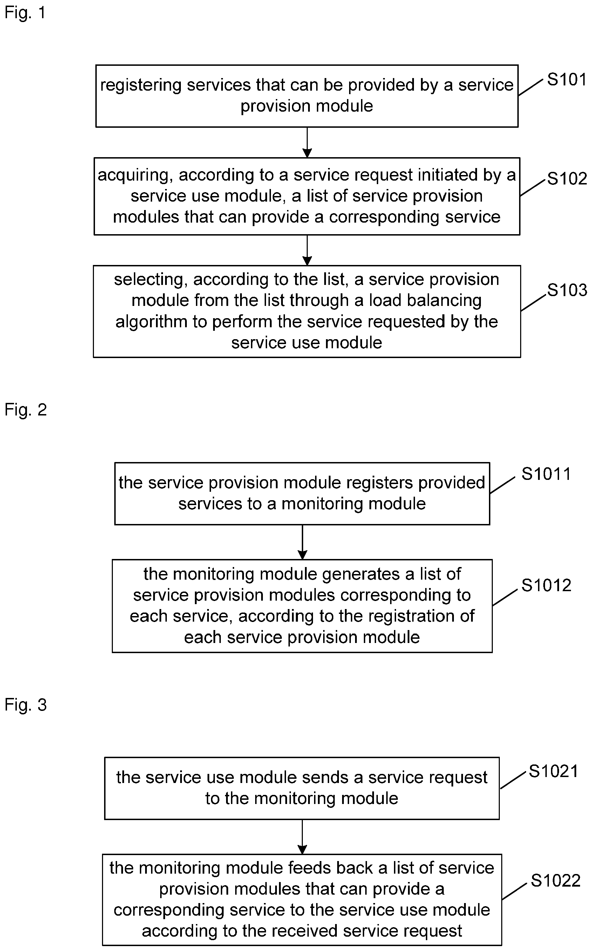

Referring to Fig. 1, the load balancing method provided by the embodiment of the present disclosure includes:
Step S101: registering services that can be provided by a service provision module.
Step S102: acquiring, according to a service request initiated by a service use module, a list of service provision modules that can provide a corresponding service.
Step S103: selecting, according to the list, a service provision module from the list through a load balancing algorithm to perform the service requested by the service use module.

In this embodiment, the service provision module is a service provider providing various services, which might be various application modules or various hardware modules. In this embodiment, multiple service provision modules can be set in one server, or only one service provision module is set in one server; one service provision module might provide multiple services, or provide one service only. The specific setting can depend on actual conditions.

In this embodiment, the service use module is a consumer of various services, which might be various applications, or various hardware modules. Multiple service use modules might be set in one client, or only one service use module is set in a client; one service use module might use multiple services simultaneously or use one service only at one time.

In step S101: services that can be provided by a service provision module might be registered by the service provision module actively, or might be registered by the service provision module according to a relevant registration requirement. The following description takes the example of the service provision module actively registering services. Referring to Fig. 2, the method includes:
Step S1011: the service provision module registers provided services to a monitoring module.
Step S1012: the monitoring module generates a list of service provision modules corresponding to each service, according to the registration of each service provision module.

In step S102, the specific process might be that the monitoring module feeds back, according to the service request initiated by the service use module, a list of service provision modules that can provide a corresponding service to the service use module, or might be that a third-part module, even the service provision module feeds back, according to the service request initiated by the service use module, a list of service provision modules that can provide a corresponding service to the service use module. This embodiment takes the example of the monitoring module providing the list for description. Referring to Fig. 3, the method includes:
Step S1021: the service use module sends a service request to the monitoring module.
Step S1022: the monitoring module feeds back a list of service provision modules that can provide a corresponding service to the service use module according to the received service request.

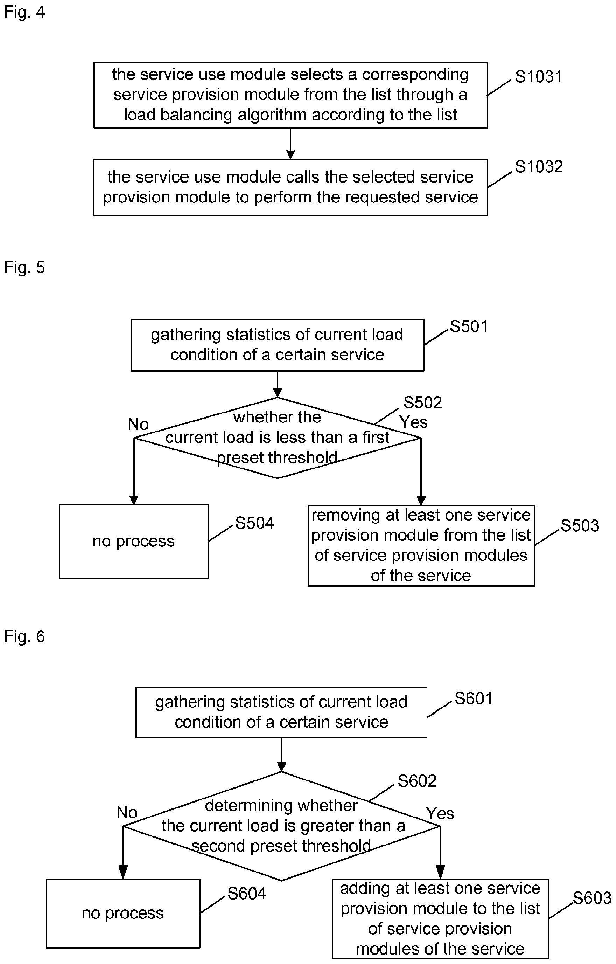

In step S103, the calculation of load of a certain service conducted according to an acquired list of application service modules of the service might be executed by the service use module, that is, load balancing calculation is performed at the client; or, the load balancing calculation might be performed at the server side, that is, on the service provision module, and of course, the load balancing calculation might be performed on a third-party module, for example, on the monitoring module. This embodiment takes the example of performing load balancing calculation on the service use module for description. Referring to Fig. 4, the method includes:
Step S1031: the service use module selects a corresponding service provision module from the list through a load balancing algorithm according to the list. In this embodiment, the load balancing algorithm specifically might adopt a software load balancing algorithm.
Step S1032: the service use module calls the selected service provision module to perform the requested service.

In this embodiment, the service use module might select one service provision module from the above list. When the selected service provision module is called failed, the service use module recalculates and selects a next one. Or, the service use module might select multiple service provision modules from the above list. The selected service provision modules are arranged in an order from low load to heavy load; and the service use module calls the service provision module in turn starting from the one with the lowest load; when call fails, the service use module directly calls a next one, thereby realizing tolerance and making the system more stable.

It is thus clear that in this embodiment load balancing reaches various specific services inside system by the manner of a monitoring module registering each service. One system (for example, a server) might be split into various services, each of which is taken as a unit to perform load balancing, but the entire system is taken as a unit, so as to cope with the requirement of consumers, thereby avoiding the phenomenon that the load of each service provision module is extremely unbalanced in the system.

In addition, in this embodiment, it is also able to smoothly adjust the number of service provision modules for a certain service, to further improve the utilization of resources. Referring to Fig. 5 and Fig. 6, the method includes:
Step S501: gathering statistics of current load condition of a certain service.
Step S502: determining according to the statistics result whether the current load of the service is less than a first preset threshold; if so, it is indicated that the service provision module is redundant, go to step S503; otherwise, go to step S504.
Step S503: removing at least one service provision module from the list of service provision modules of the service.
Step S504: no process.

In this embodiment, the first preset threshold can be set depending on specific services and specific application scenes.

Referring to Fig. 6, the method of judging whether to add a service provision module is as follows:
Step S601: gathering statistics of current load condition of a certain service
Step S602: determining according to the statistics result whether the current load of the service is greater than a second preset threshold; if so, it is indicated that the service provision module is not enough, go to step S603; otherwise, go to step S604.
Step S603: adding at least one service provision module to the list of service provision modules of the service.
Step S604: no process.

The above process specifically might be carried out by a monitoring module. By gathering statistics of current load condition of a certain service through a monitoring module, the service provision module of the service can be smoothly added or removed, that is to say, when the load of a certain service is too heavy, a service provision module of this service might be added appropriately; on the contrary, when the load of a certain service is too low, a service provision module of this service might be removed appropriately; therefore, the stability and flexibility of load balancing can be improved and the utilization of resource can be increased.

After the adjustment performed through the method shown in Fig. 5 or Fig. 6, the monitoring module can send a new service provision module list to a corresponding service use module; after the service use module receives the new list, the service use module can reselect, through a corresponding load balancing algorithm, a service use module from the list to communicate.

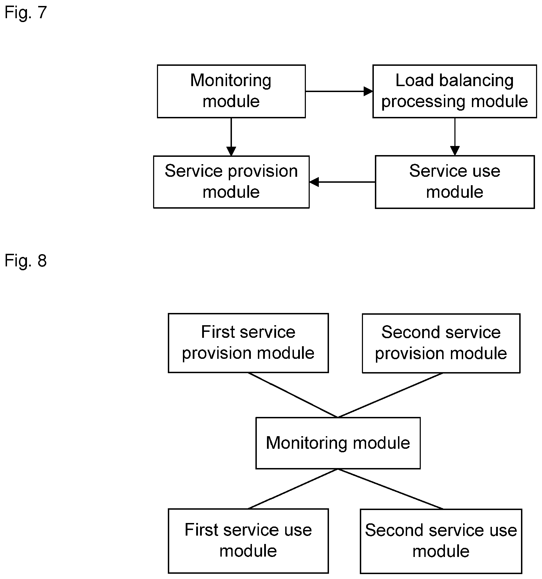

Referring to Fig. 7, which shows a load balancing system provided by the embodiment, including: a service provision module, a monitoring module, a load balancing processing module and a service use module, wherein
the monitoring module includes a registration sub-module, which is configured to register services that can be provided by the service provision module and to acquire, according to a service request initiated by the service use module, a list of service provision modules that can provide a corresponding service; and
the load balancing processing module is configured to select, according to the list, a service provision module from the list through a load balancing algorithm to perform the service requested by the service use module.

In this embodiment, the step that the registration sub-module registers services that can be provided by the service provision module includes:
the service provision module registers provided services to the registration sub-module ;
the registration sub-module generates a list of service provision modules corresponding to each service.

In this embodiment, the step that the registration sub-module acquires, according to a service request initiated by the service use module, a list of service provision modules that can provide a corresponding service includes:
the service use module sends a service request to the registration sub-module;
the registration sub-module feeds back a list of service provision modules that can provide a corresponding service to the load balancing processing module according to the service request.

In this embodiment, the monitoring module further includes a first statistics sub-module and a second statistics sub-module. The first statistics sub-module is configured to gather statistics of current load condition of a certain service, to determine according to the statistics result whether the current load of the service is less than a first preset threshold, if so, to remove at least one service provision module from the list of service provision modules of the service. The second statistics sub-module is configured to gather statistics of current load condition of a certain service, to determine according to the statistics result whether the current load of the service is greater than a second preset threshold, if so, to add at least one service provision module to the list of service provision modules of the service

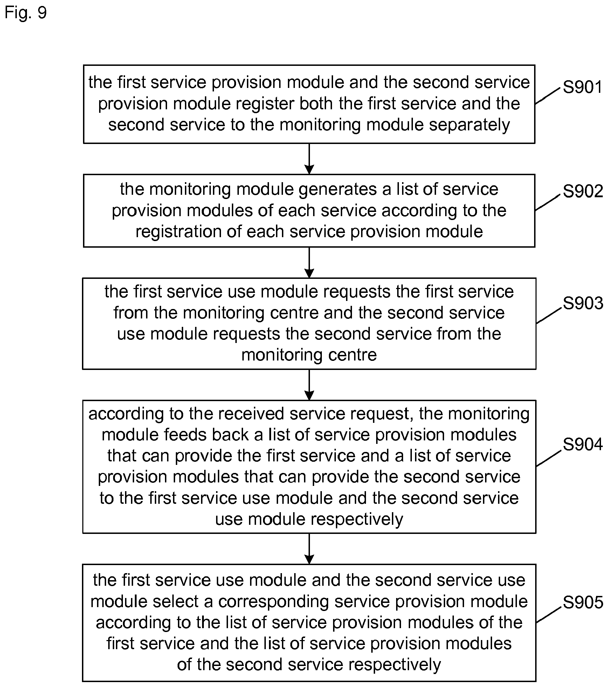

In this embodiment, the load balancing processing module might be set in each service use module, at this time the load balancing calculation is completed at the client; of course, the load balancing processing module can also be set in a service provision module or a monitoring module, or exists separately. The present disclosure is described below in a further detail by taking the example of the load balancing processing module being set in each service provision module. Referring to Fig. 8, the system includes a first service provision module, a second service provision module, a monitoring module, a first service use module and a second service use module, in which, both the first service provision module and the second service provision module can provide a first service and a second service. The specific process can refer to Fig. 9, including:
Step S901: the first service provision module and the second service provision module register both the first service and the second service to the monitoring module separately.
Step S902: the monitoring module generates a list of service provision modules of each service according to the registration of each service provision module, wherein this list might be an address list of each service provision module.
Step S903: a service use module sends a service request to the monitoring module, to find and subscribe a needed service; supposing the first service use module requests the first service from the monitoring centre and the second service use module requests the second service from the monitoring centre.
Step S904: according to the received service request, the monitoring module feeds back a list of service provision modules that can provide the first service to the first service use module and feeds back a list of service provision modules that can provide the second service to the second service use module.
Step S905: after receiving the list, the service use module selects a service provision module from the list based on a load balancing algorithm to execute the service; generally, a service provision module with the lowest current load is selected. For example, if the first service of the first service provision module has a lower load currently, the first service use module calls the first service provision module to communicate; on the contrary, if the first service of the second service provision module has a lower load currently, the first service use module calls the second service provision module to communicate; if the second service of the first service provision module has a lower load currently, the second service use module calls the first service provision module to communicate; on the contrary, if the first service of the second service provision module has a lower load currently, the second service use module calls the second service provision module to communicate.

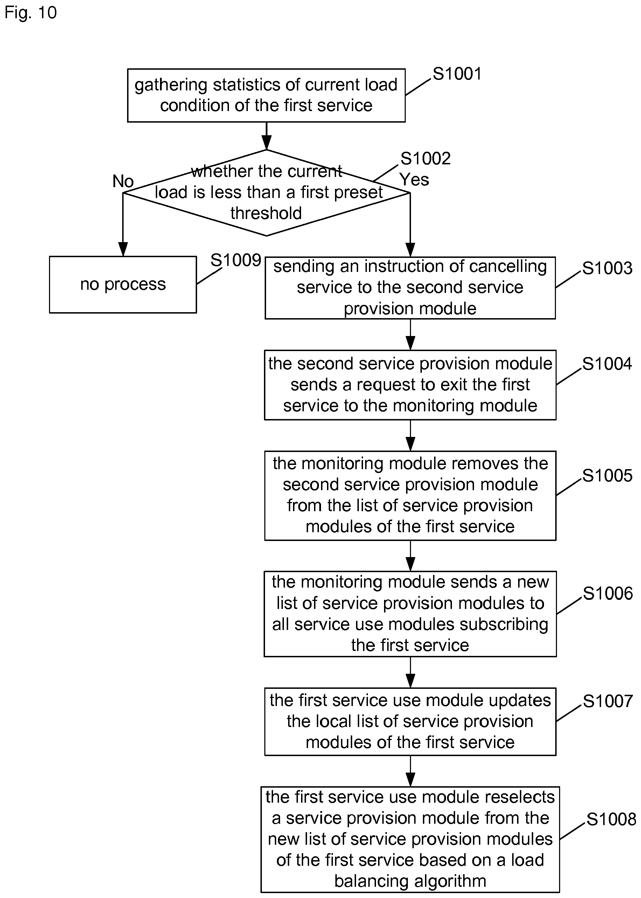

Referring to Fig. 10, the above process also can control the number of service provision modules of each service. A description is provided below by taking the example of decreasing the number of service provision modules of the first service.

Step S1001: gathering statistics of current load condition of the first service.

Step S1002: determining whether the current load of the first service is less than a first preset threshold; if so, it is indicated that the service provision module is redundant, go to step S1003; otherwise, go to step S1009.

Step S1003: sending an instruction of cancelling service to a corresponding service provision module, for example, sending an instruction of cancelling service to the second service provision module.

Step S1004: the second service provision module sends a request to exit the first service to the monitoring module.

Step S1005: after receiving the request to exit the first service, the monitoring module removes the second service provision module from the list of service provision modules of the first service.

Step S1006: the monitoring module sends a new list of service provision modules to all service use modules subscribing the first service; here, the monitoring module provides a new list of service provision modules of the first service to the first service use module.

Step S1007: after receiving the new list, the first service use module updates the local list of service provision modules of the first service.

Step S1008: the first service use module reselects a service provision module from the new list of service provision modules of the first service based on a load balancing algorithm to call and communicate; here, the first service use module selects the first service provision module from the list to call and communicate.

Step S1009: no process.

It is thus clear that in this disclosure load balancing reaches each service inside system by the manner of a monitoring module registering each service. One system (for example, a server) might be split into various services, each of which is taken as a unit to perform load balancing, but the entire system is taken as a unit, so as to cope with the requirement of consumers, thereby avoiding the phenomenon that the load of each service provision module is extremely unbalanced in the system. Meanwhile, the present disclosure also can smoothly adjust the number of service provision modules for a certain service, thereby improving the stability and flexibility of load balancing.

The above content is a detailed description made to the present disclosure in conjunction with specific embodiments; it cannot be thought that the specific embodiments of the present disclosure are limited to the description. For those of ordinary skill in the art to which the present disclosure belongs, multiple simple deductions or substitutes can be made to the present disclosure without departing from the idea of the present disclosure, and these deductions and substitutes shall fall into the scope of protection of the present disclosure.

## Claims

1. A load balancing method, **characterized in that** the method comprises:
registering services that can be provided by a service provision module (S101) in a server and acquiring, according to a service request initiated by a service use module in a client, a list of service provision modules that can provide a corresponding service (S102); and
selecting, according to the list, a service provision module from the list through a load balancing algorithm to perform the service requested by the service use module (S103); when multiple service provision modules are selected, arranging and calling the multiple service provision modules in an order from a low load to a heavy load;
wherein one or more service provision modules are set in a server; and one or more services are provided by one service provision module.

2. The load balancing method according to claim 1, wherein the step of registering services that can be provided by a service provision module comprises:
registering, by the service provision module, provided services to a monitoring module (S1011);
generating, by the monitoring module, a list of service provision modules corresponding to each service (S1012).

3. The load balancing method according to claim 2, wherein the step of acquiring, according to a service request initiated by a service use module, a list of service provision modules that can provide a corresponding service comprises:
sending, by the service use module, a service request to the monitoring module (S1021);
feeding back, by the monitoring module, a list of service provision modules that can provide a corresponding service to the service use module according to the service request (S1022).

4. The load balancing method according to any one of claims 1 to 3, wherein the step of selecting, according to the list, a service provision module from the list through a load balancing algorithm to perform the service requested by the service use module comprises:
selecting, by the service use module, a corresponding service provision module from the list through a load balancing algorithm according to the list (S1031);
calling, by the service use module, the selected service provision module to perform the requested service (S1032).

5. The load balancing method according to any one of claims 1 to 3, further comprising:
gathering statistics of current load condition of a service, and determining according to a statistics result whether the current load of the service is less than a first preset threshold; if so, removing at least one service provision module from the list of service provision modules of the service.

6. The load balancing method according to any one of claims 1 to 3, further comprising:
gathering statistics of current load condition of a service, and determining according to a statistics result whether the current load of the service is greater than a second preset threshold; if so, adding at least one service provision module to the list of service provision modules of the service.

7. A load balancing system, **characterized in that** the system comprises: a monitoring module and a load balancing processing module, wherein
the monitoring module comprises a registration sub-module, which is configured to register services that can be provided by a service provision module in a server and to acquire, according to a service request initiated by a service use module in a client, a list of service provision modules that can provide a corresponding service; and
the load balancing processing module is configured to: select, according to the list, a service provision module from the list through a load balancing algorithm to perform the service requested by the service use module; arrange and call, when multiple service provision modules are selected, the multiple service provision modules in an order from a low load to a heavy load;
wherein one or more service provision modules are set in a server; and one or more services are provided by one service provision module.

8. The load balancing system according to claim 7, wherein the registration sub-module is configured to register services provided by the service provision module and to generate a list of service provision modules corresponding to each service.

9. The load balancing system according to claim 8, wherein the registration sub-module is configured to receive a service request sent by the service use module and to feed back a list of service provision modules that can provide a corresponding service to the load balancing processing module according to the service request.

10. The load balancing system according to any one of claims 7 to 9, wherein the load balancing processing module is set in each service use module.

11. The load balancing system according to any one of claims 7 to 9, wherein
the monitoring module further comprises a first statistics sub-module, which is configured to gather statistics of current load condition of a service, to determine according to a statistics result whether the current load of the service is less than a first preset threshold, if so, to remove at least one service provision module from the list of service provision modules of the service.

12. The load balancing system according to any one of claims 7 to 9, wherein
the monitoring module further comprises a second statistics sub-module, which is configured to gather statistics of current load condition of a service, to determine according to a statistics result whether the current load of the service is greater than a second preset threshold, if so, to add at least one service provision module to the list of service provision modules of the service.

## Patentansprüche

1. Lastausgleichverfahren, **dadurch gekennzeichnet, dass** das Verfahren umfasst:
Registrieren von Diensten, die von einem Dienstbereitstellungsmodul bereitgestellt werden können, (S101) auf einem Server und Erfassen einer Liste von Dienstbereitstellungsmodulen, die einen entsprechenden Dienst bereitstellen können, gemäß einer Dienstanfrage, die von einem Dienstverwendungsmodul in einem Client inititiiert wurde (S102); und
Auswählen eines Dienstbereitstellungsmoduls gemäß der Liste aus der Liste mithilfe eines Lastausgleichalgorithmus, um den vom Dienstverwendungsmodul angeforderten Dienst durchzuführen (S103); wenn mehrere Dienstbereitstellungsmodule ausgewählt werden, Anordnen und Aufrufen der mehreren Dienstbereitstellungsmodule in einer Reihenfolge von niedriger Last bis hohe Last;
wobei ein oder mehrere Dienstbereitstellungsmodule auf einem Server eingestellt werden; und
ein oder mehrere Dienste von einem Dienstbereitstellungsmodul bereitgestellt werden.

2. Lastausgleichverfahren nach Anspruch 1, wobei der Schritt des Registrierens von Diensten, die von einem Dienstbereitstellungsmodul bereitgestellt werden können, umfasst:
Registrieren von bereitgestellten Diensten durch das Dienstbereitstellungsmodul bei einem Überwachungsmodul (S1011);
Erzeugen einer Liste von Dienstbereitstellungsmodulen, die jedem Dienst entsprechen, durch das Überwachungsmodul (S1012).

3. Lastausgleichverfahren nach Anspruch 2, wobei der Schritt des Erfassens einer List von Dienstbereitstellungsmodulen, die einen entsprechenden Dienst bereitstellen können, gemäß einer von einem Dienstverwendungsmodul initiierten Dienstanfrage umfasst:
Senden einer Dienstanfrage durch das Dienstverwendungsmodul an das Überwachungsmodul (S1021);
Zurückgeben einer Liste von Dienstbereitstellungsmodulen, die einen entsprechenden Dienst bereitstellen können, durch das Überwachungsmodul an das Dienstverwendungsmodul gemäß der Dienstanfrage (S1022).

4. Lastausgleichsverfahren nach einem der Ansprüche 1 bis 3, wobei der Schritt des Auswählens eines Dienstbereitstellungsmoduls gemäß der Liste aus der Liste durch einen Lastausgleichalgorithmus, um den vom Dienstverwendungsmodul angeforderten Dienst durchzuführen, umfasst:
Auswählen eines entsprechenden Dienstbereitstellungsmoduls durch das Dienstverwendungsmodul aus der Liste mithilfe eines Lastausgleichalgorithmus gemäß der Liste (S1031);
Aufrufen des ausgewählten Dienstbereitstellungsmoduls durch das Dienstverwendungsmodul, um den angeforderten Dienst durchzuführen (S1032).

5. Lastausgleichverfahren nach einem der Ansprüche 1 bis 3, das ferner umfasst:
Sammeln von Statistiken eines aktuellen Lastzustands eines Diensts und Ermitteln, ob die aktuelle Last des Dienstes geringer als ein erster voreingestellter Schwellenwert ist, gemäß einem Statistikergebnis; wenn dies der Fall ist, Entfernen zumindest eines Dienstbereitstellungsmoduls aus der Liste von Dienstbereitstellungsmodulen des Diensts.

6. Lastausgleichverfahren nach einem der Ansprüche 1 bis 3, das ferner umfasst:
Sammeln von Statistiken eines aktuellen Lastzustands eines Diensts und Ermitteln, ob die aktuelle Last des Dienstes größer als ein zweiter voreingestellter Schwellenwert ist, gemäß einem Statistikergebnis; wenn dies der Fall ist, Hinzufügen zumindest eines Dienstbereitstellungsmoduls zur Liste von Dienstbereitstellungsmodulen des Diensts.

7. Lastausgleichsystem, **dadurch gekennzeichnet, dass** das System umfasst: ein Überwachungsmodul und ein Lastausgleichverarbeitungsmodul, wobei:
das Überwachungsmodul ein Registrierungsuntermodul umfasst, das so konfiguriert ist, dass es Dienste, die von einem Dienstbereitstellungsmodul bereitgestellt werden können, auf einem Server registriert und eine Liste von Dienstbereitstellungsmodulen, die einen entsprechenden Dienst bereitstellen können, gemäß einer Dienstanfrage erfasst, die von einem Dienstverwendungsmodul in einem Client initiiert wurde; und
das Lastausgleichverarbeitungsmodul konfiguriert ist zum: Auswählen eines Dienstbereitstellungsmoduls gemäß der Liste aus der Liste mithilfe eines Lastausgleichalgorithmus, um den vom Dienstverwendungsmodul angeforderten Dienst durchzuführen; wenn mehrere Dienstbereitstellungsmodule ausgewählt werden, Anordnen und Aufrufen der mehreren Dienstbereitstellungsmodule in einer Reihenfolge von niedriger Last bis hohe Last;
wobei ein oder mehrere Dienstbereitstellungsmodule auf einem Server eingestellt werden; und
ein oder mehrere Dienste von einem Dienstbereitstellungsmodul bereitgestellt werden.

8. Lastausgleichsystem nach Anspruch 7, wobei das Registrierungsuntermodul so konfiguriert ist, dass es vom Dienstbereitstellungsmodul bereitgestellte Dienste registriert und eine Liste von Dienstbereitstellungsmodulen, die jedem Dienst entsprechen, erzeugt.

9. Lastausgleichsystem nach Anspruch 8, wobei das Registrierungsuntermodul so konfiguriert ist, dass es eine vom Dienstverwendungsmodul gesendete Dienstanfrage empfängt und eine Liste von Dienstbereitstellungsmodulen, die einen entsprechenden Dienst bereitstellen können, gemäß der Dienstanfrage an das Lastausgleichverarbeitungsmodul zurückgibt.

10. Lastausgleichsystem nach einem der Ansprüche 7 bis 9, wobei das Lastausgleichverarbeitungsmodul in jedem Dienstverwendungsmodul eingestellt ist.

11. Lastausgleichsystem nach einem der Ansprüche 7 bis 9, wobei:
das Überwachungsmodul ferner ein erstes Statistikuntermodul umfasst, das so konfiguriert ist, dass es Statistiken eines aktuellen Lastzustands eines Diensts sammelt, dass es gemäß einem Statistikergebnis ermittelt, ob die aktuelle Last des Dienstes geringer als ein erster voreingestellter Schwellenwert ist, dass es, wenn dies der Fall ist, zumindest ein Dienstbereitstellungsmodul aus der Liste von Dienstbereitstellungsmodulen des Diensts entfernt.

12. Lastausgleichsystem nach einem der Ansprüche 7 bis 9, wobei
das Überwachungsmodul ferner ein zweites Statistikuntermodul umfasst, das so konfiguriert ist, dass es Statistiken eines aktuellen Lastzustands eines Diensts sammelt, dass es gemäß einem Statistikergebnis ermittelt, ob die aktuelle Last des Dienstes größer als ein zweiter voreingestellter Schwellenwert ist, dass es, wenn dies der Fall ist, zumindest ein Dienstbereitstellungsmodul zur Liste von Dienstbereitstellungsmodulen des Diensts hinzufügt.

## Revendications

1. Procédé d'équilibrage de charge, **caractérisé en ce que** le procédé comporte les étapes ci-dessous consistant à :
enregistrer des services qui peuvent être fournis par un module de fourniture de services (S101) dans un serveur, et acquérir, selon une demande de service initiée par un module d'utilisation de services dans un dispositif client, une liste de modules de fourniture de services en mesure de fournir un service correspondant (S102) ; et
sélectionner, selon la liste, un module de fourniture de services de la liste, par le biais d'un algorithme d'équilibrage de charge, pour mettre en oeuvre le service demandé par le module d'utilisation de services (S103) ; lorsque de multiples modules de fourniture de services sont sélectionnés, agencer et appeler les multiples modules de fourniture de services selon un ordre allant d'une charge faible à une charge élevée ;
dans lequel un ou plusieurs modules de fourniture de services sont définis dans un serveur ; et
un ou plusieurs services sont fournis par un module de fourniture de services.

2. Procédé d'équilibrage de charge selon la revendication 1, dans lequel l'étape d'enregistrement des services qui peuvent être fournis par un module de fourniture de services comporte les étapes ci-dessous consistant à :
enregistrer, par le biais du module de fourniture de services, des services fournis, dans un module de surveillance (S1011) ;
générer, par le biais du module de surveillance, une liste de modules de fourniture de services correspondant à chaque service (S1012).

3. Procédé d'équilibrage de charge selon la revendication 2, dans lequel l'étape d'acquisition, selon une demande de service initiée par un module d'utilisation de services, d'une liste de modules de fourniture de services en mesure de fournir un service correspondant, comporte les étapes ci-dessous consistant à :
envoyer, par le biais du module d'utilisation de services, une demande de service au module de surveillance (S1021) ;
réinjecter, par le biais du module de surveillance, une liste de modules de fourniture de services qui peuvent fournir un service correspondant, dans le module d'utilisation de services, selon la demande de service (S1022).

4. Procédé d'équilibrage de charge selon l'une quelconque des revendications 1 à 3, dans lequel l'étape de sélection, selon la liste, d'un module de fourniture de services de la liste, par le biais d'un algorithme d'équilibrage de charge, pour mettre en oeuvre le service demandé par le module d'utilisation de services, comporte les étapes ci-dessous consistant à :
sélectionner, par le biais du module d'utilisation de services, un module de fourniture de services correspondant de la liste, par le biais d'un algorithme d'équilibrage de charge, selon la liste (S1031) ;
appeler, par le biais du module d'utilisation de services, le module de fourniture de services sélectionné, en vue de mettre en oeuvre le service demandé (S1032).

5. Procédé d'équilibrage de charge selon l'une quelconque des revendications 1 à 3, comportant en outre les étapes ci-dessous consistant à :
collecter des statistiques d'état de charge en cours d'un service, et déterminer, selon un résultat statistique, si la charge en cours du service est inférieure à un premier seuil prédéfini ; le cas échéant, supprimer au moins un module de fourniture de services de la liste de modules de fourniture de services du service.

6. Procédé d'équilibrage de charge selon l'une quelconque des revendications 1 à 3, comportant en outre les étapes ci-dessous consistant à :
collecter des statistiques d'état de charge en cours d'un service, et déterminer, selon un résultat statistique, si la charge en cours du service est supérieure à un second seuil prédéfini ; le cas échéant, ajouter au moins un module de fourniture de services à la liste de modules de fourniture de services du service.

7. Système d'équilibrage de charge, **caractérisé en ce que** le système comporte : un module de surveillance et un module de traitement d'équilibrage de charge, dans lequel :
le module de surveillance comporte un sous-module d'enregistrement, qui est configuré de manière à enregistrer des services qui peuvent être fournis par un module de fourniture de services, dans un serveur, et à acquérir, selon une demande de service initiée par un module d'utilisation de services dans un dispositif client, une liste de modules de fourniture de services en mesure de fournir un service correspondant ; et
le module de traitement d'équilibrage de charge est configuré de manière à : sélectionner, selon la liste, un module de fourniture de services de la liste, par le biais d'un algorithme d'équilibrage de charge, pour mettre en oeuvre le service demandé par le module d'utilisation de services ; agencer et appeler, lorsque de multiples modules de fourniture de services sont sélectionnés, les multiples modules de fourniture de services, selon un ordre allant d'une charge faible à une charge élevée ;
dans lequel un ou plusieurs modules de fourniture de services sont définis dans un serveur ; et
un ou plusieurs services sont fournis par un module de fourniture de services.

8. Système d'équilibrage de charge selon la revendication 7, dans lequel le sous-module d'enregistrement est configuré de manière à enregistrer des services fournis par le module de fourniture de services, et à générer une liste de modules de fourniture de services correspondant à chaque service.

9. Système d'équilibrage de charge selon la revendication 8, dans lequel le sous-module d'enregistrement est configuré de manière à recevoir une demande de service envoyée par le module d'utilisation de services, et à réinjecter une liste de modules de fourniture de services qui peuvent fournir un service correspondant dans le module de traitement d'équilibrage de charge, selon la demande de service.

10. Système d'équilibrage de charge selon l'une quelconque des revendications 7 à 9, dans lequel le module de traitement d'équilibrage de charge est défini dans chaque module d'utilisation de services.

11. Système d'équilibrage de charge selon l'une quelconque des revendications 7 à 9, dans lequel
le module de surveillance comporte en outre un premier sous-module statistique qui est configuré de manière à collecter des statistiques d'état de charge en cours d'un service, à déterminer, selon un résultat statistique, si la charge en cours du service est inférieure à un premier seuil prédéfini, et le cas échéant, à supprimer au moins un module de fourniture de services de la liste de modules de fourniture de services du service.

12. Système d'équilibrage de charge selon l'une quelconque des revendications 7 à 9, dans lequel
le module de surveillance comporte en outre un second sous-module statistique qui est configuré de manière à collecter des statistiques d'état de charge en cours d'un service, à déterminer, selon un résultat statistique, si la charge en cours du service est supérieure à un second seuil prédéfini, et le cas échéant, à ajouter au moins un module de fourniture de services à la liste de modules de fourniture de services du service.
